# FASCICULE DE BREVET EUROPEEN

(11) **EP 3 373 558 B1**
(45) Date de publication et mention de la délivrance du brevet: **04.09.2019**
(21) Numéro de dépôt: 18160657.5
(22) Date de dépôt: 08.03.2018
(51) Int. Cl.: H04L 29/08, H04L 29/12

(54) **PROCÉDÉ DE COMMUNICATION POUR ASSURER LE MAINTIEN D'UNE SESSION APPLICATIVE ENTRE UN TERMINAL ET UN SERVEUR D'APPLICATION**
KOMMUNIKATIONSVERFAHREN ZUR SICHERSTELLUNG DER AUFRECHTERHALTUNG EINER ANWENDUNGSSESSION ZWISCHEN EINEM ENDGERÄT UND EINEM ANWENDUNGSSERVER
COMMUNICATION METHOD FOR MAINTAINING AN APPLICATION SESSION BETWEEN A TERMINAL AND AN APPLICATION SERVER

(30) Priorité: 08.03.2017 FR 1751906
(43) Date de publication de la demande: 12.09.2018
(73) Titulaire: Airbus DS SLC, 78990 Elancourt (FR)
(72) Inventeur: MARQUE-PUCHEU, Gérard, 78480 Verneuil (FR); PATEROUR, Olivier, 78280 Guyancourt (FR); LALLET, Arthur, 02260 La Flamengrie (FR)
(74) Mandataire: Cabinet Camus Lebkiri

(56) Documents cités:
- EP-A2- 1 441 483
- US-A1- 2010 312 880
- US-A1- 2016 234 164

## Description

### DOMAINE

Le domaine de l'invention concerne les procédés et systèmes de communication assurant une continuité de fonctionnement lorsqu'un terminal utilisateur bascule d'un réseau à un autre. Plus particulièrement, le domaine de l'invention se rapporte à la reconfiguration dynamique d'une passerelle NAT pour assurer la continuité de certains services de communication entre deux entités communicantes.

### ETAT DE L'ART

Actuellement, des techniques d'établissement de communication entre deux entités communicantes existent et sont déployées au sein des réseaux de communications, tels qu'entre deux terminaux utilisateurs, entre applications communicantes déployées sur des équipements d'un réseau ou entre un terminal utilisateur et un serveur d'application.

Cependant, les communications directes entre différentes entités communicantes sur le réseau Internet sont difficiles à mettre en oeuvre du fait de la complexité des architectures réseaux déployées et des nombreux réseaux privés ou locaux par lesquels les entités communicantes accèdent au réseau Internet. Cette difficulté résulte notamment du déploiement de protocoles constituant des freins à la mise en oeuvre de liens dynamiques en point à point. Par exemple, les passerelles NAT convertissant des adresses locales d'un réseau local en adresses publics sur le réseau Internet, et vice et versa, ne permettent pas une mise en oeuvre efficace de l'établissement de tels liens point à point. En effet, la mise en oeuvre d'une passerelle NAT pour accéder à d'autres réseaux a pour conséquence de masquer les adresses des équipements d'un réseau local et notamment des clients et services accessibles dudit réseau local.

Afin de pallier ces difficultés, on connait selon la terminologie anglo-saxonne l'« Interactive Connectivity Establishment », noté ICE, qui permet de définir des routes de communications entre entités communicantes de point à point en prenant en compte l'architecture de passerelles NAT. Cette technique est notamment utilisée pour les protocoles de voix sur IP, noté VoIP, de transmission de flux vidéo ou encore de transmissions de messages instantanés. La technique ICE est souvent associée aux protocoles STUN (RFC5389) et TURN (RFC 5766). Les protocoles STUN et TURN désignent respectivement « Session Traversai Utilities for NAT » et Traversai Using Relays around NAT ». Ils sont des protocoles permettant la mise en oeuvre des techniques NAT lorsqu'une découverte d'adresses est nécessaire ou qu'un tiers relayeur est nécessaire pour surmonter les difficultés par exemple de la mise en oeuvre d'un Firewall avec une technique NAT.

Un problème vient du fait que généralement un lien point à point, établi entre deux services ou deux clients de deux équipements de différents réseaux connectés au réseau Internet, implique pour certains médias l'indication d'un port de communication qui dépend du type de média. Bien qu'une passerelle NAT permet d'effectuer des correspondances d'adresses d'un réseau local/privé vers un réseau public et réciproquement. En effet, une passerelle NAT ne gère pas nécessairement les réaffectations des ports lors des changements d'adresses des entêtes des messages transmis car ces derniers sont indiqués dans le corps des messages échangés. C'est notamment le cas lorsqu'une passerelle NAT est utilisée avec le protocole SIP, dont l'acronyme désigne « Session Initialisation Protocol ».

Un serveur STUN permet d'échanger des informations relatives aux différents types d'adresses publics et locales ainsi que les numéros de ports entre deux entités communicantes afin que ces dernières puissent communiquer au travers de passerelles NAT et avec différentes ressources applicatives.

Le document de l'art antérieur US2010 / 0312880 décrit la mise en oeuvre d'une usurpation d'adresse IP ou de numéro de port, à cette fin, une passerelle est fournie pour intercepter ou écouter des messages STUN, ICE, TURN.

Aujourd'hui, les techniques ICE associées aux protocoles STUN et TURN ont des mécanismes de reconstruction de sessions applicatives lors de déconnexions d'un équipement ou d'une bascule d'un réseau d'accès à un autre. Un intérêt de ces mécanismes est de permettre une certaine mobilité d'un terminal tout en assurant une indépendance vis-à-vis de l'architecture réseau. En particulier, ces mécanismes s'affranchissent de l'architecture réseau, notamment de l'architecture des passerelles NAT ou des firewalls, afin de rendre les communications de données immunes du chemin emprunté par les paquets de données.

Toutefois, lorsqu'un terminal qui communique avec un serveur d'application change de réseaux d'accès à un réseau Internet ou lorsqu'il est déconnecté et reconnecté à un même réseau local, un inconvénient des précédentes techniques est que la session applicative doit être reconfigurée entre le terminal et le serveur d'application. Même si les canaux de transmission de données sont rétablis, il n'en reste pas moins que ceci est particulièrement gênant lors de la bascule d'un premier réseau d'accès à un second réseau d'accès notamment lorsqu'un utilisateur est mobile et qu'il souhaite maintenir sa session applicative.

On comprend que la reconfiguration d'une session applicative entre deux entités communicantes nécessitant généralement une initialisation et des échanges de données préliminaires implique un allongement des durées de latences et une discontinuité de services offerts. A titre d'exemple, le protocole VoIP nécessite une reconfiguration de la session applicative le plus rapidement possible compte tenu des contraintes temps réel. En conséquence les mécanismes de reconstructions de sessions applicatives bien qu'utiles paraissent insuffisantes pour garantir une qualité de service à un utilisateur donné. Un choix peut être ne pas basculer de réseaux tant qu'une session applicative est établie de sorte que la prise en compte du nouveau réseau d'accès est ignorée.

### RESUME DE L'INVENTION

L'invention vise à pallier aux inconvénients précités.

Selon un aspect, l'invention concerne un procédé de communication entre une première entité communicante connectée à un premier réseau grâce à une première passerelle NAT d'un premier réseau local et un serveur d'application, ledit serveur d'application étant associé à une passerelle NAT paramétrable NAT0 permettant de faire correspondre au moins une adresse d'au moins la première passerelle NAT avec au moins une adresse public de la première entité communicante, appelée adresse réflexive du pair, comportant les étapes suivantes :
▪ Etablissement d'une première séquence d'échanges de candidats, lesdits candidats comprenant au moins une adresse IP et un port, comportant :
   ∘ Une collecte de candidats par la première entité auprès d'un serveur mettant en oeuvre les protocoles ICE, STUN ou TURN afin d'être atteint par un serveur distant par l'intermédiaire de la première passerelle NAT ;
   ∘ Un échange de candidats entre la première entité et le serveur d'application entrainant la transmission de l'adresse réflexive du pair entre la passerelle NAT paramétrable et la première passerelle ;
   ∘ Une transmission par la première entité d'un historique de candidats attribués à la première entité vers le serveur d'application ;
   ∘ Vérification des canaux entre pairs de candidats établis entre la première entité et le serveur d'application ;
▪ Génération d'un premier canal de transmission assurant l'établissement d'une première session applicative ;
▪ Détection par la première entité communicante d'un nouveau réseau d'accès comportant une seconde passerelle NAT ou d'une reconnexion au premier réseau d'accès subséquente à une déconnexion, entrainant l'établissement d'une seconde séquence d'échanges de nouveaux candidats comportant des étapes similaires à la première séquence;
▪ Configuration automatique de la passerelle paramétrable par une fonction du serveur d'application de manière à modifier la correspondance entre l'adresse source de la première ou de la seconde passerelle NAT avec l'adresse réflexive du pair de la passerelle NAT paramétrable à partir de l'historique des candidats transmis par l'entité communicante ;
▪ Génération d'un second canal de transmission entre la première entité communicante et le serveur d'application assurant le maintien de la première session applicative.

Un avantage est de permettre d'assurer une continuité de fonctionnement d'une application grâce au maintien d'une session applicative. L'invention s'applique particulièrement bien dans deux cas de figures :
- lorsqu'une entité communicante est déconnectée pour une raison quelconque du réseau et qu'une reconnexion est nécessaire. La configuration précédente permet de rétablir une session applicative qui était déjà configurée sans avoir à réinitialiser une nouvelle session applicative ;
- lorsqu'une entité communicante détecte un nouveau réseau et qu'une indication est reçue ou une décision est prise de poursuivre une communication précédemment établie sur un premier réseau vers le nouveau réseau détecté. Dans cette configuration, la communication est poursuivie par l'intermédiaire du nouveau réseau sans réinitialisation de la session applicative déjà existante.

Selon un mode de réalisation, les candidats comportent, outre une adresse IP et un numéro de port :
∘ Un identifiant d'application et/ou;
∘ Un identifiant SIP.

Selon un mode de réalisation, la session applicative comporte un identifiant d'application de l'entité communicante associée à un identifiant d'application du serveur d'application, un maintien d'une session applicative impliquant le maintien de l'association des identifiants d'application.

Selon un mode de réalisation, l'établissement de la première et la seconde séquence d'échanges de candidats comportent successivement :
▪ Un échange de candidats d'un protocole de signalisation entre l'entité communicante et le serveur d'application ;
▪ Un échange de candidats d'un protocole applicatif entre un client de l'entité communicante et un client du serveur d'application ;
▪ Un échange de candidats d'un protocole de routage entre la première ou la seconde passerelle NAT et la passerelle paramétrable.

Selon un mode de réalisation, la passerelle NAT comprend une horloge permettant de déterminer les durées pendant lesquelles aucune données n'est transmise dans le canal de transmission, la dite durée permettant de générer un indicateur de priorité affecté à un candidat stocké dans la passerelle et associé à un terminal.

Selon un autre aspect, l'invention concerne un système de communication comportant un serveur applicatif comportant au moins un client applicatif et une passerelle NAT paramétrable, ledit serveur applicatif étant en mesure de procéder à un échange de candidats avec une entité communicante distante sur requête par l'intermédiaire de la passerelle NAT, ladite passerelle NAT paramétrable attribuant une adresse public au serveur d'application, nommée adresse réflexive du pair cette adresse étant associée à l'entité communicante distante, de manière à établir un premier canal de transmission assurant l'établissement d'une première session applicative, caractérisé en ce qu'une nouvelle requête d'échange de candidats comportant un historique des précédents candidats reçu d'une même entité communicante vers le serveur d'application entraine une configuration de la passerelle NAT paramétrable de manière à modifier l'association entre au moins un candidat transmis et l'adresse réflexive du pair de la passerelle NAT paramétrable, le système établissant un second canal de transmission entre l'entité communicante et le serveur d'application assurant le maintien de la première session applicative.

Selon un autre aspect l'invention concerne une entité communicante comportant au moins un module radio ou réseau permettant de transmettre des données sur au moins une interface dudit terminal connecté à un réseau, ladite entité communicante comportant une mémoire dans laquelle un historique de candidats est enregistré et associé à un serveur d'application, lesdits candidats étant par exemple collectés auprès d'un serveur mettant en oeuvre l'un des protocoles ICE, STUN ou TURN, ladite entité communicante comportant au moins un calculateur pour insérer dans au moins une trame d'un protocole SIP un champ de données comportant l'historique des candidats collectés et mémorisés dès qu'un canal de transmission est généré entre ledit terminal et un serveur d'application, l'entité communicante comportant deux modems permettant de détecter la présence d'au moins deux réseaux d'accès et de générer deux canaux de transmissions en parallèle dans lesquels une session applicative établie entre ledit terminal utilisateur et un serveur d'application bascule d'un canal de transmission à un autre en conservant un même identifiant de session.

### BREVE DESCRIPTION DES FIGURES

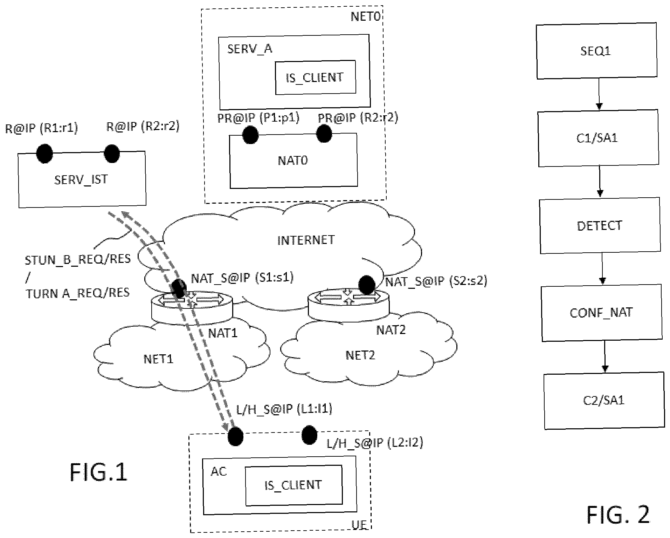

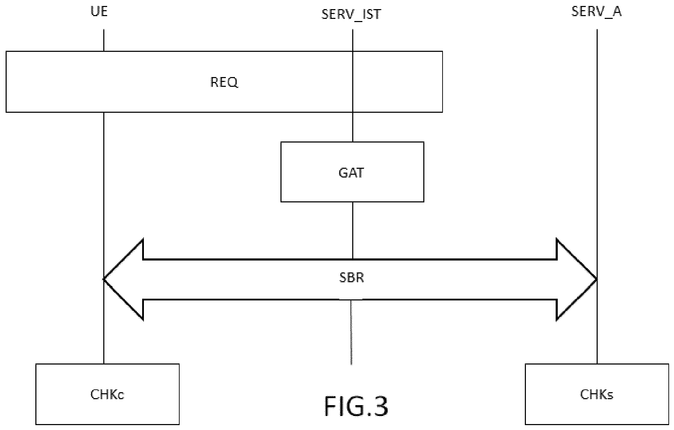

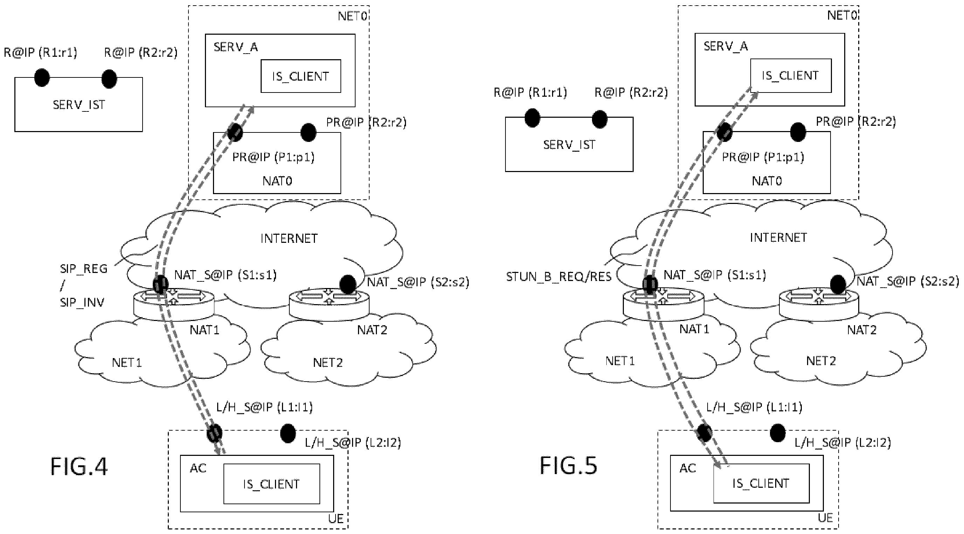

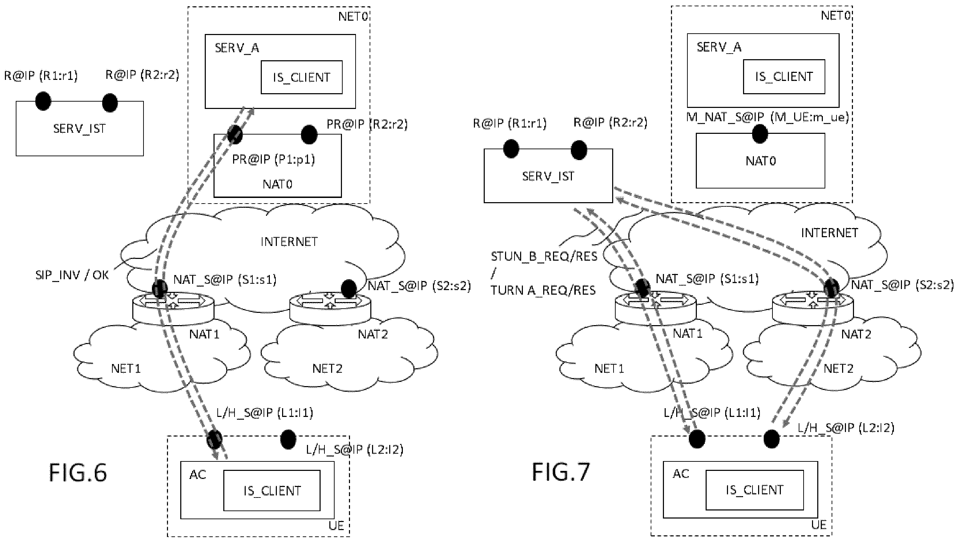

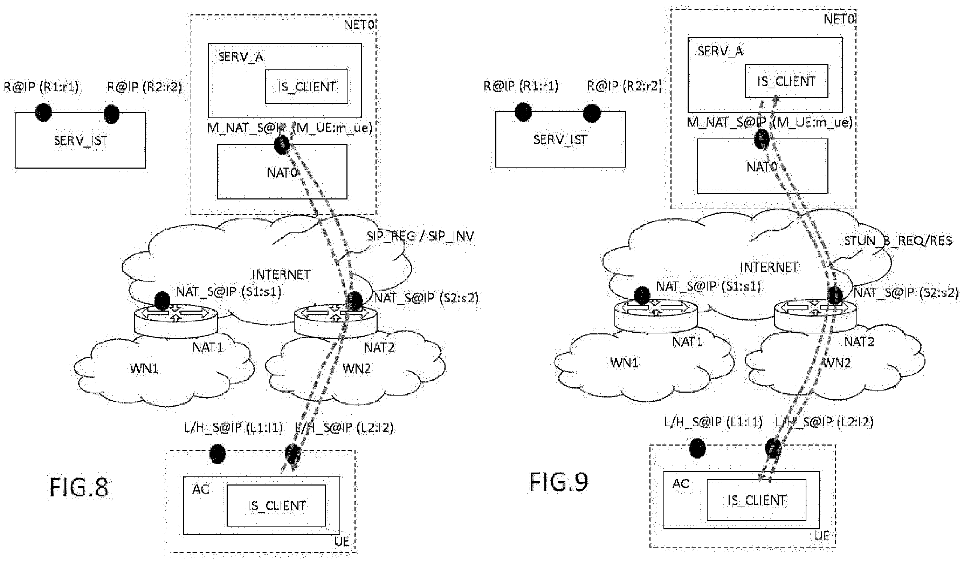

D'autres caractéristiques et avantages de l'invention ressortiront à la lecture de la description détaillée qui suit, en référence aux figures annexées, qui illustrent :
▪ figure 1 : une architecture de communication permettant d'illustrer la première étape de collecte de candidats du procédé de l'invention auprès d'un serveur ICE/STUN/TURN;
▪ figure 2: les principales étapes du procédé de l'invention;
▪ figure 3: la séquence de collecte de candidats et d'échange de ces derniers entre deux entités communicantes;
▪ figure 4: une architecture de communication de la figure 1 représentant la séquence d'échange des candidats d'un protocole de signalisation entre les deux entités communicantes ;
▪ figure 5: une architecture de communication de la figure 1 représentant la séquence d'échange des candidats d'un protocole applicatif entre les deux entités communicantes ;
▪ figure 6: une architecture de communication de la figure 1 représentant la validation de la séquence d'échange des candidats entre deux entités communicantes ;
▪ figure 7: un cas d'exemple dans lequel une entité communicante détecte un second sous-réseau et entame une séquence de collecte de candidats selon le procédé de l'invention;
▪ figure 8: une architecture de communication de la figure 7 représentant la séquence d'échange des candidats d'un protocole de signalisation entre les deux entités communicantes pour communiquer à partir du second sous-réseau découvert ;
▪ figure 9: une architecture de communication de la figure 7 représentant la séquence d'échange des candidats d'un protocole applicatif entre les deux entités communicantes pour communiquer à partir du second sous-réseau découvert.

### DESCRIPTION

Le procédé de l'invention est décrit ci-après à partir d'un exemple mettant en oeuvre deux entités communicantes. Les entités communicantes peuvent être selon les modes de réalisation :
▪ deux serveurs d'application ;
▪ deux terminaux utilisateurs ;
▪ un terminal utilisateur et un serveur d'application.

Dans la suite de la description, le mode de réalisation d'un canal de transmission de données entre un terminal UE et un serveur d'application SERV_A est détaillé. Dans le mode de réalisation décrit ci-après, le terminal UE comporte un client AC pour une application donnée et le serveur d'application SERV_A comporte un service pour cette application donnée. L'application est dans ce cas définie par la conjonction de fonctionnement du client et du service associé réalisant des fonctions d'une application donnée.

D'autres configurations sont compatibles de l'invention, par exemple, lorsque deux services coopèrent ou deux clients coopèrent pour réaliser une fonction d'une application donnée. L'invention se rapporte également aux cas où les entités communicantes comprennent une pluralité de services et de clients. Il est entendu, que selon les configurations envisagées, le serveur d'application SERV_A peut comprendre une partie client.

La figure 1 représente un réseau INTERNET auquel est connecté :
▪ un premier réseau local NET1 à partir d'une première passerelle NAT1 ;
▪ un second réseau local NET2 à partir d'une seconde passerelle NAT2 ;
▪ un troisième réseau local NET0 à partir d'une seconde passerelle paramétrable NAT0.
▪ un serveur ICE/STUN/TURN, noté SERV_IST, mettant en oeuvre l'un des protocoles au moins ICE, STUN ou TURN et offrant des services connus d'allocation de candidats pour des équipements disposés dans un réseau local et visibles et/ou accessibles par des équipements raccordés au réseau INTERNET par l'intermédiaire d'une passerelle NAT.

Dans cette configuration illustrée en figure 1, un serveur d'application SERV_A est connecté au réseau INTERNET par l'intermédiaire du réseau local NET0 par l'intermédiaire de la première passerelle NATO. Le terminal UE est connecté au réseau INTERNET par l'intermédiaire d'un premier réseau local NET et d'une passerelle NAT1. Dans la suite de la description, sera détaillé le cas d'une détection par le terminal UE d'un second réseau local NET 2 connecté au réseau INTERNET par l'intermédiaire d'une seconde passerelle NAT2.

### Terminal UE

Un terminal utilisateur UE comportant un client AC est représenté sur la figure 1. Le client AC permet de réaliser une pluralité de fonctions d'une application donnée. Afin de communiquer avec un tiers, le client s'interface avec un client ICE/STUN, noté IS_CLIENT. Ce client permet d'obtenir des informations permettant d'établir un canal de transmission de données avec un tiers. Par exemple, le IS_CLIENT permet d'obtenir une adresse et un port à partir d'une passerelle NAT de manière à être « vu » d'un tiers extérieur au réseau local NET1. Le client IS_CLIENT permet d'établir des canaux de transmission de données supportant une session applicative pour assurer le fonctionnement d'une application mise en oeuvre par le couple {Client ; Service}.

Un terminal utilisateur UE comporte à minima :
▪ un calculateur permettant de réaliser des calculs, des comparaisons de champs de message, des corrélations de valeurs, etc. ;
▪ une mémoire permettant de stocker des paramètres, des données d'identifications, etc. ;
▪ au moins une interface de données associée à au moins un module radio ou réseau permettant de transmettre des données sur au moins un lien.

Selon un mode de réalisation, un terminal UE comporte deux modules radio/ réseau associés à deux interfaces de sortie du terminal. Cette configuration permet notamment d'établir des liens parallèles entre d'une part le terminal UE et d'autre part au moins deux passerelles NAT afin :
▪ d'établir simultanément différentes sessions applicatives entre d'une part le terminal UE et d'autre part différents serveurs d'application ou ;
▪ de permettre une bascule d'un canal de transmission à un autre canal d'une session applicative entre le terminal UE et un serveur SERV_A.

A chacune des interfaces du terminal UE est associée une adresse locale attribuée, par exemple, par une passerelle NAT1 d'un sous réseau local NET1 ou par des équipements du réseau. La figure 1 illustre deux adresses locales attribuées à deux interfaces réseau du terminal UE : L/H_S@IP(L1:I1) et L/H_S@IP(L2:I2). Ces dernières sont attribuées par le réseau, par exemple un réseau LTE. Dans le cas d'exemple de la figure 1, le NAT1 attribue l'adresse réseau S1 :s1 à l'interface réseau de la passerelle NAT1.

Le terminal peut être un ordinateur, une tablette, un téléphone intelligent, un autre serveur, un objet connecté ou tout autre équipement électronique comportant une interface de connexion à un réseau de données et une système d'exploitation permettant de mettre en oeuvre au moins un protocole de communication.

### Serveur d'Application

La seconde entité communicante, dans la présente description, est un serveur d'application noté SERV_A comportant des moyens pour mettre en oeuvre une pluralité de fonctions éventuellement de différentes applications. Selon un exemple de réalisation, le serveur d'application SERV_A permet de mettre en oeuvre un service d'une application. Le serveur d'application SERV_A comporte, un client ICE/STUN, noté IS_CLIENT qui permet d'obtenir des informations permettant d'établir des canaux de transmission de données supportant au moins une session applicative entre le client du terminal UE et le service hébergé par le serveur d'application SERV_A.

Selon un mode de réalisation, le serveur d'application SERV_A est accessible via une passerelle NAT paramétrable et notée NATO. L'invention est compatible d'une architecture comportant différentes passerelles NAT en cascade. L'invention se rapporte notamment aux deux cas suivants :
▪ le cas où le serveur est connecté à un réseau local NET0 accessible par l'intermédiaire d'au moins un serveur NAT paramétrable ;
▪ le cas où le serveur est connecté directement au réseau internet par exemple lorsque le service est un service WEB.

Dans ce dernier cas, un algorithme de gestion des candidats est mise en oeuvre directement au sein du serveur SERV_A. Dans la suite de la description, le mode de réalisation dans lequel le serveur SERV_A est connecté à une passerelle NAT paramétrable est détaillé.

Le serveur d'application SERV_A comporte à minima :
▪ un calculateur permettant de réaliser des calculs, des comparaisons de champs de message, des corrélations de valeurs, etc. ;
▪ une mémoire permettant de stocker des paramètres, des données d'identification, etc.
▪ au moins une interface de données associée à au moins un module radio ou réseau permettant de transmettre des données sur au moins une interface du serveur.

Lorsque le serveur d'application SERV_A est dans un réseau local NET0 accessible via une passerelle NATO paramétrable, cette dernière permet de faire correspondre au moins une adresse @serv_a du serveur d'application SERV_A avec au moins une adresse public, appelée « adresse réflexive du pair » et notée AR-P.

### SERVEUR ICE/STUN/TURN

Afin de permettre la mise en oeuvre une application par le serveur d'application SERV_A et par le terminal UE à partir respectivement d'un service et d'un client hébergés chacun par ces derniers, le procédé de l'invention comporte une séquence de collecte de candidats auprès d'un serveur ICE/STUN/TURN.

On nomme « candidats » dans la description toutes informations ou données relatives à un adressage dynamique ou statique ou un ensemble d'identifiants, tels que :
▪ l'adressage d'un équipement réseau tel qu'un serveur, un terminal, une passerelle, un routeur ou un commutateur ;
▪ l'adressage d'un client qu'il soit exécuté sur un terminal ou sur tout autre équipement.

En outre, selon un mode de réalisation de l'invention, les informations suivantes peuvent être transmises avec les candidats :
▪ l'identifiant d'un service qu'il soit exécuté sur un serveur d'application ou tout autre équipement ;
▪ L'identifiant d'un protocole de signalisation, de routage ou toute autre protocole permettant d'établir un canal de transmission entre deux équipements.

Les candidats peuvent être collectés, par exemple, par un terminal UE, pour :
▪ configurer l'émission d'un message en indiquant l'adresse source et un port dans l'entête et le corps d'une trame émise;
▪ paramétrer une interface ou un client, tel que le client IS_CLIENT, afin d'établir un canal de transmission entre différentes entités communicantes accessibles par l'intermédiaire de passerelles NAT ;
▪ mettre à jour une table de correspondance d'une passerelle NAT ou d'un routeur du réseau internet ou d'un réseau local.

Différents modes de réalisation permettent de mettre en oeuvre certains aspects de l'invention selon les traitements des candidats collectés par une entité communicante auprès d'un serveur SERV_IST.

Le serveur SERV_IST comporte des adresses relais pour le mode de réalisation dans lequel le protocole TURN est activé. Elles sont notées sur la figure 1 : R@IP(R1:r1) et R@IP(R2:r2).

### Introduction des étapes du procédé

La figure 2 représente les principales étapes du procédé de l'invention. Il comprend une première séquence SEQ1 de collecte de candidats auprès du serveur SERV_IST par le terminal UE et par le serveur d'application SERV_A. Cette première étape est détaillée à la figure 3. La figure 3 illustre également l'étape d'échange des candidats et de validation des liens établis entre deux entités communicantes.

Le procédé comporte ensuite une seconde étape C1/SA1 d'établissement d'un canal de transmission pour établir une session applicative entre le terminale UE et le serveur d'applications SERV_A, il peut s'agir par exemple d'un service de voix sur IP. Cette étape est illustrée aux figures 4 et 5, elle comporte la transmission de candidats collectés par le terminal UE au serveur SERV_A et d'un historique de candidats collectés par le terminal.

Le procédé comporte une troisième étape DETECT dans laquelle le terminal détecte :
- soit un nouveau réseau local NET2 dans lequel il est susceptible de basculer au moins une communication avec un tiers via une second passerelle NAT de ce second réseau local ;
- soit une déconnexion et une reconnexion au réseau local NET1, par exemple suite à une déconnexion liée au réseau, comme par exemple lorsqu'une déconnexion au réseau LTE survient du fait d'une absence de réception de signal ou parce qu'un chronomètre de la passerelle NAT déclenche une déconnexion suite à la détection d'une inactivité sur un canal de transmission établi.

Cette troisième étape est illustrée par la figure 7.

Le procédé comporte une quatrième étape CONF_NAT dans laquelle la passerelle NAT est automatiquement configurée pour établir un canal de transmission du serveur d'application SERV_A au terminal UE via un second réseau local NET2. Cette étape est illustrée aux figures 8 et 9. D'une manière générale, la reconfiguration de la passerelle NAT permet de conserver, par exemple, un identifiant SIP ou un identifiant d'une session applicative suite à un changement de route physique dans le réseau entre les deux entités communicantes. Cela peut également s'appliquer à une déconnexion et une reconnexion du terminal UE à un même sous réseau.

L'établissement d'un second canal de transmission s'effectue au sein d'une cinquième étape C2/SA1 consécutive à l'étape de configuration CONF_NAT de la passerelle NAT sans qu'une modification des candidats de la session applicative précédemment établie ne soit effectuée du point de vue du serveur SERV_A qui communique toujours avec le client IS_CLIENT avec la même adresse attribuée par le NATO. Cette étape est illustrée aux figures 8 et 9.

### Description détaillée des principales étapes du procédé

### Première étape : SEQ1

### -Collectes des candidats

La figure 3 représente les principales étapes d'échange de données d'une séquence SEQ1 dite « d'échange de candidats » entre un serveur ICE/STUN/TURN et un terminal UE. Une telle séquence SEQ1 est partiellement connue de l'état de l'art et constitue une première étape du procédé de l'invention. Il est connu de l'état de l'art comment s'opère une première collecte de candidats s'opère entre un premier équipement UE et un serveur SERV_IST puis entre un second équipement SERV_A et le serveur SERV_IST et enfin entre les premier UE et second SERV_A équipements.

Le procédé est particulièrement avantageux en ce que cette séquence SEQ1 comporte une amélioration vis-à-vis de l'état de l'art. En effet, l'amélioration vise à ce que le terminal UE communique un historique de candidats collectés par le passé lors de précédentes connexions entre le premier équipement UE et le second équipement SERV_A. Cet avantage, comme cela est détaillé ci-après, permet de configurer la passerelle NATO de manière à garantir une continuité de fonctionnement de meilleure qualité, notamment en ce qui concerne le maintien de la connexion logique de la session applicative entre le client et le serveur réalisant l'application.

L'étape SEQ1 concerne la collecte de candidats auprès du serveur SERV_IST par le terminal UE et par le serveur d'application SERV_A.

En préambule, notons que les candidats collectés selon l'application mise en oeuvre et/ou la session média qui sera établie peuvent comprendre au moins un candidat parmi lesquels :
- une adresse locale IP et un port ;
- une adresse privée IP du serveur d'application SERV_A et un port transposée par une passerelle NATx du réseau, cette adresse est également notée « adresse réflexive » du serveur ;
- une adresse public IP du serveur d'application SERV_A et un port transposée par une passerelle NATx du réseau, cette adresse est également notée « adresse réflexive du pair» du serveur ;
- une adresse relaie et un port du serveur SERV_IST lorsque le protocole TURN est mise en oeuvre.

En particulier les candidats du terminal UE comprennent par exemple :
- une adresse locale IP et un port du terminal UE ;
- une adresse privée IP du terminal UE et un port transposée par une passerelle NATx du réseau, cette adresse est également notée « adresse réflexive » du terminal UE ;
- une adresse public IP du terminal UE et un port transposée par une passerelle NATO du réseau, cette adresse est également notée « adresse paire réflexive » du terminal UE ;
- une adresse relaie et un port du terminal UE relayée par le serveur SERV_IST lorsque le protocole TURN est mise en oeuvre.

Une première requête REQ est générée par le terminal UE au serveur ICE/STUN/TURN dans l'objectif de récupérer, par exemple, une adresse IP et un port pour être visible et accessible depuis un équipement raccordé au réseau INTERNET au-delà du réseau local NET1. Ce mode de fonctionnement correspond au fonctionnement du protocole STUN dans lequel les candidats sont transmis au terminal UE.

Selon un autre mode de réalisation impliquant la mise en oeuvre du protocole TURN, les candidats comprennent les adresses relais du serveur SERV_IST. Dans ce dernier cas, les interfaces relais du serveur SERV_IST sont utilisées pour atteindre un équipement tiers. Ce mode de réalisation, n'est pas détaillé, toutefois le procédé de l'invention se rapporte également à sa mise en oeuvre. L'homme de l'art peut aisément adapter les étapes de l'invention à la mise en oeuvre d'une configuration impliquant un protocole TURN.

Dans un mode de réalisation dans lequel le protocole STUN est mis en oeuvre dans l'étape de collecte des candidats, étape également nommée « collecte de candidats ICE », les candidats comprennent au moins une adresse IP et un port.

Dans cette étape de collecte, la requête REQ visant requérir les candidats auprès du serveur SERV_IST peut comprendre la collecte de plusieurs candidats pour mettre en oeuvre différentes sessions média entre le terminal UE et un ou plusieurs serveurs d'application SERV_A. Ces candidats sont renvoyés dans un message par le serveur IST au terminal UE et au serveur SERV_A, notamment dans une autre étape de collecte initiée par le serveur SERV_A.

Le terminal UE peut, dans un second temps, échanger les candidats avec la passerelle NAT1 de son réseau local. La passerelle NAT1 est en mesure d'utiliser, notamment les candidats, pour définir une adresse public et mettre à jour la table de correspondance entre les adresses publics et privés des équipements du réseau local NET1. Le terminal UE comporte un client IS_CLIENT permettant d'obtenir les informations permettant d'établir un canal de transmission avec un tiers comportant un client similaire. L'adresse IP source et le port peuvent être générés dans les entêtes et au besoin dans le corps des messages transmis à un tiers au-delà du réseau local NET1.

La séquence SEQ1 comporte une étape similaire de collecte de candidats par le serveur d'application SERV_A auprès du serveur IST ou d'un serveur SERV_IST dupliqué.

### - Echange de candidats UE-SERV_A

On rappelle que les candidats peuvent concerner différentes sessions média, différentes applications, un protocole de signalisation et/ou encore les adresses et ports IP des interfaces, etc.

Par exemple, un lien applicatif définissant une session applicative établie entre le terminal UE et le serveur SERV_A peut nécessiter le transfert des candidats du terminal UE au serveur SERV_A et réciproquement. En conséquence selon l'application, le choix et la configuration des émissions de candidats entre les deux entités sont générés par le client et le service réalisant l'application.

La séquence SEQ1 comporte donc une étape SBR d'échange de candidats entre le terminal UE et le serveur d'application SERV_A. Lorsque le terminal UE émet les candidats et un historique de ces derniers au serveur SERV_A, ce dernier entraine la transmission de l'adresse réflexive du serveur SERV_IST entre la passerelle paramétrable NATO et la première passerelle NAT1.

Plus précisément, selon le procédé de l'invention, cette séquence SEQ1 comporte une transmission par la première entité UE d'un historique de candidats attribués à la première entité UE vers le serveur d'application SERV_A. Cet historique comporte les différentes allocations d'adresses que le terminal UE a précédemment utilisées de sorte que le serveur est capable de les utiliser pour configurer au besoin la passerelle NATO paramétrable.

### - Validation des pairs

Cette séquence SEQ1 comporte, en outre, une étape de vérification CHKc des canaux entre pairs de candidats établis entre la première entité UE et le serveur d'application SERV_A. Cette étape consiste à vérifier l'appairage des candidats en testant le lien IP ou le lien signalétique, par exemple établi à partir d'un protocole SIP. Enfin, la session applicative peut être vérifiée également.

Lorsque tous les liens sont établis, le procédé de l'invention met en oeuvre une étape de validation de la connectivité de ces derniers. A titre d'exemple une requête STUN : « STUN Binding Request » peut être émise du terminal UE au serveur SERV_A pour chaque candidat.

Le serveur SERV_A renvoie une réponse, comme par exemple une « STUN BINDING RESPONSE » Cette étape permet la découverte de l'adresse réflexive du pair du terminal UE, c'est à dire M_UE:m_ue, telle qu'assignée par la passerelle NAT0.

Le serveur SERV_A est alors en mesure de transmettre une adresse public du serveur générée par la passerelle paramétrable NATO notée AR-P.

Au terme de cette première séquence SEQ1, le terminal UE et le serveur d'application SERV_A sont capables de s'atteindre dans la mesure où les candidats, i.e. les adresses et ports de l'équipement tiers, sont connus des équipements dans leur réseau local, respectivement NET0 et NET1. La seconde étape C1/SA1 du procédé débute alors pour aboutir à l'établissement d'une session applicative SA1 sur le canal de transmission C1. Lors de l'établissement des liens entre le terminal UE et le serveur d'application SERV_A, les passerelles NAT1 et NATO qui sont traversées transposent les adresses locales en adresses publics. Le client IS_CLIENT associé à une application d'un équipement permet de générer les adressages des champs nécessaires dans les entêtes et le corps des paquets qui sont transmis à l'équipement tiers pour qu'il soit correctement « vu » et atteint par ce tiers.

### Seconde étape :C1/SA1

La figure 4 représente la seconde étape du procédé de l'invention C1/SA1 comportant l'établissement d'un canal de transmission C1 et d'une session applicative SA1 entre le serveur d'application SERV_A et le terminal UE. Dans l'exemple de la figure 4, l'établissement du canal C1 met en oeuvre un protocole de signalisation SIP pour la mise en oeuvre d'une session applicative SA1 comportant une requête et une réponse. On précise que l'invention ne se limite pas à la mise en oeuvre du protocole SIP et qu'elle se rapporte également à tout autre type de protocole autre que le protocole SIP. Il peut s'agir, par exemple, d'une requête INVITE du protocole SIP permettant à un client de demander une nouvelle session, il peut également s'agir d'une requête REGISTER permettant un enregistrement d'un client auprès d'un service du serveur ou d'un autre serveur. Lors de l'établissement de ces échanges, le procédé de l'invention permet d'e transmettre les précédents candidats SIP au serveur d'application SERV_A. Dans ce cas de figure, le terminal UE et l'application sont configurés pour transmettre l'historique des candidats précédemment utilisés au serveur d'application SERV_A.

En plus de l'historique des candidats, l'établissement de transmission C1 peut comprendre également les précédents identifiants d'applications ou les identifiants SIP, ou tout autre candidats, qui ont été échangés entre le terminal UE et le serveur SERV_A. Comme nous l'avons vu précédemment, dans le cadre de la mise en oeuvre du protocole SIP dans l'invention, les précédents identifiants SIP ayant servi à établir des précédentes liaisons entre le terminal UE et le serveur SERV_A peuvent être transmis dans cet historique.

Le serveur d'application SERV_A peut émettre une réponse au terminal UE visant à finaliser l'établissement d'un canal de transmission C1 et de la session applicative SA1. Dans le cas où le protocole SIP est mis en oeuvre, une réponse OK peut être émise par SERV_A. Le corps du message peut être formalisé selon un protocole XML ou SDP ou tout autre protocole permettant de transmettre un flux d'informations d'une entité communicante à une autre.

L'établissement du canal de transmission peut comprendre la mise en oeuvre d'une pluralité de pairs de liens correspondant à une pluralité de couches protocolaires activées entre le terminal UE et le serveur d'application SERV_A.

Un intérêt est de transmettre une adresse public AR-P du serveur SERV_A au terminal UE et/ou à la passerelle NAT1 qui reste identique compte tenu qu'un traitement des candidats collectés sur les liens passés par le procédé de l'invention permettra de conserver un lien logique. Cette possibilité permet notamment d'associer la même adresse AR-P à de nouveaux candidats détectés d'un équipement ayant déjà établi un lien précédemment avec le serveur d'application SERV_A.

En effet, l'adresse public du terminal UE peut potentiellement changer, par exemple, lorsque le terminal UE est vu ou détecté par un autre réseau local NET2. Un effet particulièrement intéressant obtenu par l'invention réside dans le maintien d'au moins une session applicative qui peut être mise en oeuvre du fait de la configuration du NAT paramétrable.

Le procédé de l'invention comprend une troisième étape DETECT qui a pour conséquence que la passerelle paramétrable NATO est capable de percevoir le terminal UE à partir d'un autre lien physique que le lien qui a été précédemment établi à la seconde étape, notamment en ce qui concerne l'adresse source qui lui est attribuée par une seconde passerelle NAT2 ou possiblement par la première passerelle NAT1, lorsque ce nouveau lien physique est conséquent à une déconnexion.

On distingue au moins deux modes de réalisation de l'invention qui correspondent à deux types de scénarios envisageables.

Dans un premier cas, le terminal UE détecte ou est détecté par un second réseau local NET2. Le procédé de l'invention permet d'effectuer une bascule d'au moins une session applicative d'un premier canal de transmission à un second canal de transmission, lesdits canaux reliant le terminal UE à un serveur d'application SERV_A.

Dans un second cas, le terminal UE est déconnecté du premier réseau pour un raison quelconque et est reconnecté ensuite. Dans ce second cas, l'étape de collecte des candidats auprès du serveur SERV_IST devrait être rééditée.

Ces deux modes visent à rétablir un second lien physique entre le terminal UE et le serveur d'application SERV_A. Le premier mode est donc décrit dans la suite de la description. L'homme de l'art adapterait aisément le premier mode au second mode.

Lorsque le terminal UE détecte un second réseau local NET2, comme par exemple un réseau WIFI, le client IS_CLIENT du terminal UE procède à une seconde collecte de candidats auprès du serveur SERV_IST par l'intermédiaire de la passerelle NAT2. Cette étape est représentée à la figure 7. Les étapes déjà décrites dans la séquence SEQ 1 sont similaires aux étapes engagées par le terminal UE auprès du serveur SERV_IST. Les précédents candidats attribués au terminal UE sont donc réémis dans cette séquence SEQ1, ils complètent un historique de candidats déjà collectés par le terminal UE.

Lors de l'établissement du second canal de transmission C2, cette étape est représentée aux figures 8 et 9, les candidats sont échangés entre le terminal UE et le serveur SERV_A. Cette étape est similaire à l'échange des candidats effectués afin d'établir le canal C1.

Le serveur d'application SERV_A est en mesure de transmettre à la passerelle paramétrable NATO des données relatives aux candidats collectés et à l'historique de ces candidats provenant de l'établissement du second canal C2. Le procédé de l'invention comporte alors une étape de configuration de la passerelle NAT0.

Selon un premier mode de réalisation la passerelle NAT0 est en mesure de reconfigurer ces tables de correspondances à partir de l'historique des candidats transmis et d'un algorithme de priorisation hébergé et mise en oeuvre par la passerelle NAT0. La configuration de la passerelle NAT0 est active.

Selon un second mode de réalisation, la table de correspondances des adresses de la passerelle NAT0 est mise à jour à partir d'une consigne générée par le serveur d'application SERV_A.

La passerelle NAT0 réalise les calculs de manière à reconfigurer les tables de correspondances notamment avec les adresses publics et les ports à partir des informations venant de SERV_A.

Par exemple, il peut s'agir d'un identifiant d'application ou un identifiant SIP. La configuration de la passerelle NAT0 est dans ce cas passive.

Le procédé de l'invention se rapporte à ces deux modes de réalisation.

Dans le premier mode de réalisation, la passerelle NAT reconfigure ses tables de correspondances à partir des nouveaux candidats transmis par le terminal UE au serveur SERV_A et émis ensuite du serveur SERV_A à la passerelle NAT0. L'algorithme de priorisation mise en oeuvre par la passerelle NATO permet de déterminer à partir de l'historique des candidats transmis si le terminal UE a déjà établi une session applicative ou une découverte SIP.

Dans ce dernier cas, la passerelle NAT0 modifie ces tables de correspondances entre adresses publics et adresses privés en transposant l'adresse public du serveur AR-P comme adresse source du serveur SERV_A pour le nouveau canal de transmission C2 établi entre le terminal UE et le serveur SERV_A. Un intérêt est de conserver les identifiants ou adresses attribués pour établir les sessions applicatives entre le terminal UE et le serveur SERV_A qui étaient actives via le canal C1. Un avantage est donc d'offrir une continuité de service au niveau applicatif lors d'un changement de réseau local NET1 vers NET2, par exemple quand le terminal UE est sujet à une mobilité.

## Revendications

1. Procédé de communication entre une première entité communicante (UE) connectée à un premier réseau (INTERNET) grâce à une première passerelle NAT (NAT1) d'un premier réseau local (NET1) et un serveur d'application (SERV_A), ledit serveur d'application (SERV_A) étant associé à une passerelle NAT paramétrable (NATO) permettant de faire correspondre au moins une adresse d'au moins la première passerelle NAT (NAT1, NAT2) avec au moins une adresse public (S1, S2) de la première entité communicante (UE), appelée adresse réflexive du pair (AR-P), comportant les étapes suivantes :
▪ Etablissement d'une première séquence d'échanges de candidats (SEQ1), lesdits candidats comprenant au moins une adresse IP et un port, comportant :
∘ Une collecte de candidats par la première entité (UE) auprès d'un serveur mettant en oeuvre les protocoles ICE, STUN ou TURN afin d'être atteint par un serveur distant (SERV_A) par l'intermédiaire de la première passerelle NAT (NAT1) ;
∘ Un échange de candidats entre la première entité (UE) et le serveur d'application (SERV_A) entrainant la transmission de l'adresse réflexive du pair (AR-P) entre la passerelle NAT paramétrable (NATO) et la première passerelle (NAT1) ;
∘ Une transmission par la première entité (UE) d'un historique de candidats attribués à la première entité (UE) vers le serveur d'application (SERV_A) ;
∘ Vérification des canaux entre pairs de candidats établis entre la première entité (UE) et le serveur d'application (SERV_A) ;
▪ Génération d'un premier canal de transmission assurant l'établissement d'une première session applicative (SA1) ;
▪ Détection par la première entité communicante (UE) d'un nouveau réseau d'accès (NET2) comportant une seconde passerelle NAT (NAT2) ou d'une reconnexion au premier réseau d'accès (NET1) subséquente à une déconnexion, entrainant l'établissement d'une seconde séquence d'échanges (SEQ2) de nouveaux candidats comportant des étapes similaires à la première séquence (SEQ1) ;
▪ Configuration automatique de la passerelle paramétrable (NAT0) par une fonction du serveur d'application (SERV_A) de manière à modifier la correspondance entre l'adresse source de la première ou de la seconde passerelle NAT (NAT1, NAT2) avec l'adresse réflexive du pair (AR-P) de la passerelle NAT paramétrable (NAT0) à partir de l'historique des candidats transmis par l'entité communicante (UE) ;
▪ Génération d'un second canal de transmission entre la première entité communicante (UE) et le serveur d'application (SERV_A) assurant le maintien de la première session applicative (SA1).

2. Procédé de communication selon la revendication 1, **caractérisé en ce que** les candidats comportent, outre une adresse IP et un numéro de port :
∘ Un identifiant d'application et/ou;
∘ Un identifiant SIP.

3. Procédé de communication selon l'une quelconques des revendications 1 à 2, **caractérisé en ce que** la session applicative comporte un identifiant d'application de l'entité communicante (UE) associée à un identifiant d'application du serveur d'application (SERV_A), un maintien d'une session applicative impliquant le maintien de l'association des identifiants d'application.

4. Procédé de communication selon l'une quelconque des revendications 1 à 3, **caractérisé en ce que** l'établissement de la première et la seconde séquence d'échanges de candidats (SEQ1) comportent successivement :
▪ Un échange de candidats d'un protocole de signalisation entre l'entité communicante (UE) et le serveur d'application (SERV_A);
▪ Un échange de candidats d'un protocole applicatif entre un client de l'entité communicante (UE) et un client du serveur d'application (SERV_A) ;
▪ Un échange de candidats d'un protocole de routage entre la première ou la seconde passerelle NAT (NAT1, NAT2) et la passerelle paramétrable (NATO).

5. Procédé de communication selon l'une quelconque des revendications 1 à 4, **caractérisé en ce que** la passerelle NAT comprend une horloge permettant de déterminer les durées pendant lesquelles aucune données n'est transmise dans le canal de transmission (C1), la dite durée permettant de générer un indicateur de priorité affecté à un candidat stocké dans la passerelle et associé à un terminal (UE).

6. Système de communication comportant un serveur applicatif (SERV_A) comportant au moins un client applicatif et une passerelle NAT paramétrable (NATO), ledit serveur applicatif (SERV_A) étant en mesure de procéder à un échange de candidats comprenant au moins une adresse IP et un port, avec une entité communicante distante (UE) sur requête par l'intermédiaire de la passerelle NAT, ladite passerelle NAT paramétrable (NATO) attribuant une adresse public au serveur d'application (SERV_A), nommée adresse réflexive du pair (AR-P) cette adresse étant associée à l'entité communicante distante (UE), de manière à établir un premier canal de transmission assurant l'établissement d'une première session applicative (SA1), **caractérisé en ce qu'**une nouvelle requête d'échange de candidats comportant un historique des précédents candidats reçu d'une même entité communicante vers le serveur d'application (SERV_A) entraine une configuration de la passerelle NAT paramétrable (NATO) de manière à modifier l'association entre au moins un candidat transmis et l'adresse réflexive du pair (AR-P) de la passerelle NAT paramétrable (NATO), le système établissant un second canal de transmission entre l'entité communicante et le serveur d'application (SERV_A) assurant le maintien de la première session applicative (SA1).

7. Entité communicante (UE) comportant au moins un module radio ou réseau permettant de transmettre des données sur au moins une interface dudit terminal (UE) connecté à un réseau, ladite entité communicante (UE) comportant une mémoire dans laquelle un historique de candidats comprenant au moins une adresse IP et un port, est enregistré et associé à un serveur d'application (SERV_A), lesdits candidats étant collectés auprès d'un serveur mettant en oeuvre l'un des protocoles ICE, STUN ou TURN (SERV_IST), ladite entité communicante (UE) comportant au moins un calculateur pour insérer dans au moins une trame d'un protocole SIP un champ de données comportant l'historique des candidats collectés et mémorisés dès qu'un canal de transmission est généré entre ledit terminal (UE) et un serveur d'application (SERV_A), ladite entité communicante (UE) comportant deux modems permettant de détecter la présence d'au moins deux réseaux d'accès (NET1, NET2) et de générer deux canaux de transmissions en parallèle dans lesquels une session applicative établie entre ledit terminal utilisateur (UE) et un serveur d'application (SERV_A) bascule d'un canal de transmission à un autre en conservant un même identifiant de session.

## Patentansprüche

1. Kommunikationsverfahren zwischen einer ersten Kommunikationseinheit (UE), die dank eines ersten Gateways NAT (NAT1) eines ersten lokalen Netzes (NET1) und eines Anwendungsservers (SERV-A) an ein erstes Netz (INTERNET) angeschlossen ist, wobei der genannte Anwendungsserver (SERV_A) einem parametrierbaren (NATO) Gateway NAT zugeordnet ist, das das Entsprechen wenigstens einer Adresse von weniger als dem ersten Gateway NAT (NAT1, NAT2) mit wenigstens einer öffentlichen Adresse (S1, D2) der ersten Kommunikationseinheit (UE) zulässt, bezeichnet als reflexive Adresse des Paars (AR-P), die die folgenden Schritte umfasst:
• Aufbau einer ersten Kandidaten-Austauschsequenz (SEQ1), wobei die genannten Kandidaten wenigstens eine IP-Adresse und einen Port umfassen, umfassend:
∘ ein Erfassen von Kandidaten durch die erste Einheit (UE) bei einem Server, der die Protokolle ICE, STUN oder TURN umsetzt, um durch einen entfernten Server (SERV_A) anhand des ersten Gateways NAT (NAT1) erreicht zu werden;
∘ einen Austausch von Kandidaten zwischen der ersten Einheit (UE) und dem Anwendungsserver (SERV_A), der die Übertragung der reflexiven Adresse des Paars (AR-P) zwischen dem parametrierbaren (NATO) Gateway NAT und dem ersten Gateway (NAT1) antreibt;
∘ eine Übertragung einer Historie von Kandidaten, die der ersten Einheit (UE) zugeordnet sind, durch die erste Einheit (UE) an den Anwendungsserver (SER_A);
∘ Überprüfung der Kanäle zwischen Kandidatenpaaren, die zwischen der ersten Einheit (UE) und dem Anwendungsserver (SER_A) hergestellt sind;
• Erzeugen eines ersten Übertragungskanals, der den Aufbau einer ersten Anwendungs-Session (SA1) gewährleistet;
• Feststellen eines neuen Zugangsnetzes (NET2), umfassend ein zweites Gateway NAT (NAT2) oder einer erneuten Verbindung mit dem ersten Zugangsnetz (NET1) im Anschluss an eine Trennung, durch die erste Kommunikationseinheit (UE), was zum Aufbau einer zweiten Austauschsequenz (SEQ2) von neuen Kandidaten führt, umfassend der ersten Sequenz (SEQ1) ähnliche Schritte;
• Automatische Einrichtung des parametrierbaren Gateways (NATO) durch eine Funktion des Anwendungsservers (SERV_A) derart, dass die Entsprechung zwischen der Quelladresse des ersten oder des zweiten Gateways NAT (NAT1, NAT2) mit der reflexiven Adresse des Paars (AR-P) des parametrierbaren (NATO) Gateways NAT ausgehend von der Historie der Kandidaten, die von der Kommunikationseinheit (UE) übertragen wird, abgeändert wird;
• Erzeugen eines zweiten Übertragungskanals zwischen der ersten Kommunikationseinheit (UE) und dem Anwendungsserver (SEER_A), der das Halten der ersten Anwendungs-Session (SA1) gewährleistet.

2. Kommunikationsverfahren gemäß Anspruch 1, **dadurch gekennzeichnet, dass** die Kandidaten neben einer IP-Adresse und einer Port-Nummer umfassen:
∘ eine Anwendungskennung und / oder;
∘ eine SIP-Kennung.

3. Kommunikationsverfahren gemäß irgendeinem der Ansprüche 1 bis 2, **dadurch gekennzeichnet, dass** die Anwendungs-Session eine Anwendungskennung der Kommunikationseinheit (UE) umfasst, die einer Anwendungskennung des Anwendungsservers (SER_A) zugeordnet ist, wobei ein Halten einer Anwendungs-Session das Halten der Zuordnung der Anwendungskennungen impliziert.

4. Kommunikationsverfahren gemäß irgendeinem der Ansprüche 1 bis 3, **dadurch gekennzeichnet, dass** der Aufbau der ersten und der zweiten Kandidaten-Austauschsequenz (SEQ1) sukzessive umfassen:
• einen Kandidatenaustausch eines Meldeprotokolls zwischen der Kommunikationseinheit (UE) und dem Anwendungsserver (SER_A);
• einen Kandidatenaustausch eines Anwendungsprotokolls zwischen einem Client der Kommunikationseinheit (UE) und einem Client des Anwendungsservers (SER_A);
• einen Kandidatenaustausch eines Weiterleitungsprotokolls zwischen dem ersten oder dem zweiten Gateway NAT (NAT1, NAT2) und dem parametrierbaren Gateway (NATO).

5. Kommunikationsverfahren gemäß irgendeinem der Ansprüche 1 bis 4, **dadurch gekennzeichnet, dass** das Gateway NAT eine Zeituhr umfasst, die das Bestimmen der Dauern zulässt, in denen keine Daten in dem Übertragungskanal (C1) übertragen werden, wobei die genannte Dauer das Erzeugen eines Prioritätsindikators zulässt, der einem Kandidaten zugeordnet ist, der im Gateway gespeichert und einem Endgerät (UE) zugeordnet ist.

6. Kommunikationssystem, umfassend einen Anwendungsserver (SER_A), umfassend wenigstens einen Anwendungs-Client und ein parametrierbares (NATO) Gateway NAT, wobei der genannte Anwendungsserver (SER_A) in der Lage ist, einen Austausch von Kandidaten, umfassend wenigstens eine IP-Adresse und einen Port, gegen eine entfernte Kommunikationseinheit (UE) auf Anforderung durch das Gateway NAT vorzunehmen, wobei das genannte parametrierbare (NATO) Gateway NAT dem Anwendungsserver (SERV_A) eine öffentliche Adresse zuteilt, bezeichnet als reflexive Adresse des Paars (AR-P), wobei diese Adresse der entfernten Kommunikationseinheit (UE) derart zugeteilt ist, dass ein erster Übertragungskanal den Aufbau einer ersten Anwendungs-Session (SA1) gewährleistet, **dadurch gekennzeichnet, dass** eine neue Austauschanfrage von Kandidaten, die eine Historie der vorherigen Kandidaten umfasst, die von einer und derselben Kommunikationseinheit zum Anwendungsserver (SERV_A) empfangen ist, eine Einrichtung des parametrierbaren (NATO) Gateways NAT derart nach sich zieht, dass die Zuordnung zwischen wenigstens einem übertragenen Kandidaten und der reflexiven Adresse des Paars (AR-P) des parametrierbaren (NATO) Gateways NAT abgeändert wird, wobei das System einen zweiten Übertragungskanal zwischen der Kommunikationseinheit und dem Anwendungsserver (SER_A) aufbaut, der das Halten der ersten Anwendungs-Session (SAT1) gewährleistet.

7. Kommunikationseinheit (UE), umfassend wenigstens ein Funkmodul oder Netz, das das Übertragen der Daten auf wenigstens eine Schnittstelle des genannten, an ein Netz angeschlossenes Endgeräts (UE) ermöglicht, wobei die genannte Kommunikationseinheit (UE) einen Speicher umfasst, in dem eine Kandidatenhistorie, die wenigsten eine IP-Adresse und einen Port umfasst, bei einem Anwendungsserver (SERV_A) angemeldet und diesem zugeordnet ist, wobei die genannten Kandidaten bei einem Server erfasst sind, der eines der Protokolle ICE, STUN oder TURN (SERV_IST) umsetzt, wobei die genannte Kommunikationseinrichtung (UE) wenigstens einen Rechner zum Einfügen eines Datenfeldes, das die Historie der erfassten und gespeicherten Kandidaten umfasst, sobald ein Übertragungskanal zwischen dem genannten Endgerät (UE) und einem Anwendungsserver (SERV_A) erzeugt ist, in wenigstens ein Raster eines Protokolls SIP umfasst, wobei die genannte Kommunikationseinheit (UE) zwei Modems umfasst, die das Feststelen des Vorhandenseins von wenigstens zwei Zugangsnetzen (NET1, NET2) und das Erzeugen von zwei Übertragungskanälen parallel zulässt, in denen eine Anwendungs-Session zwischen dem genannten Nutzer-Endgerät (UE) und einem Anwendungsserver (SER_A) von einem Übertragungskanal zu einem anderen umschaltet und dabei eine und dieselbe Kennungs-Session beibehält.

## Claims

1. Method of communication between a first communicating entity (UE) connected to a first network (INTERNET) thanks to a first gateway NAT (NAT1) of a first local network (NET1) and an application server (SERV_A), said application server (SERV_A) being associated with a gateway NAT that can be configured (NATO) making it possible to have at least one address of at least the first gateway NAT (NAT1, NAT2) correspond with at least one public address (S1, S2) of the first communicating entity (UE), called reflexive address pair (AR-P), comprising the following steps:
• Establishing of a first candidate exchange sequence (SEQ1), said candidates comprising at least one IP address and a port, comprising:
∘ A collecting of candidates by the first entity (UE) from a server implementing the ICE, STUN or TURN protocols so as to be reached by a remote server (SERV_A) by the intermediary of the first gateway NAT (NAT1);
∘ An exchanging of candidates between the first entity (UE) and the application server (SERV_A) resulting in the transmission of the reflexive address pair (AR-P) between the gateway NAT that can be configured (NATO) and the first gateway (NAT1);
∘ A transmission by the first entity (UE) of a history of candidates attributed to the first entity (UE) to the application server (SERV_A);
∘ Verification of the channels between pairs of candidates established between the first entity (UE) and the application server (SERV_A);
• Generating a first transmission channel providing the establishing of a first application session (SA1);
• Detecting by the first communicating entity (UE) of a new access network (NET2) comprising a second gateway NAT (NAT2) or of a reconnection to the first access network (NET1) following a disconnection, resulting in the establishing of a second sequence of exchanges (SEQ2) of new candidates comprising steps similar to the first sequence (SEQ1);
• Automatic configuring of the gateway that can be configured (NATO) by a function of the application server (SERV_A) in such a way as to modify the correspondence between the source address of the first or of the second gateway NAT (NAT1, NAT2) with the reflexive address pair (AR-P) of the gateway NAT that can be configured (NATO) using the history of the candidates transmitted by the communicating entity (UE);
• Generating a second transmission channel between the first communicating entity (UE) and the application server (SERV_A) providing the maintaining of the first application session (SA 1).

2. Method of communication according to claim 1, **characterised in that** the candidates comprise, in addition to an IP address and a port number:
∘ An application identifier and/or;
∘ A SIP identifier.

3. Method of communication according to any of claims 1 to 2, **characterised in that** the application session comprises an application identifier of the communicating entity (UE) associated with an application identifier of the application server (SERV_A), with a maintaining of the application session entailing the maintaining of the association of the application identifiers.

4. Method of communication according to any of claims 1 to 3, **characterised in that** the establishing of the first and the second candidate exchange sequence (SEQ1) successively comprises:
• An exchanging of candidates of a signalling protocol between the communicating entity (UE) and the application server (SERV_A);
• An exchanging of candidates of an application protocol between a client of the communicating entity (UE) and a client of the application server (SERV_A);
• An exchanging of candidates of a routing protocol between the first or the second gateway NAT (NAT1, NAT2) and the gateway that can be configured (NATO).

5. Method of communication according to any of claims 1 to 4, **characterised in that** the gateway NAT comprises a clock that makes it possible to determine the durations during which no data is transmitted in the transmission channel (C1), said duration making it possible to generate a priority indicator assigned to a candidate stored in the gateway and associated with a terminal (UE).

6. System of communication comprising an application server (SERV_A) comprising at least one application client and a gateway NAT that can be configured (NATO), said application server (SERV_A) being able to proceed with an exchanging of candidates comprising at least one IP address and a port, with a remote communicating entity (UE) on query by the intermediary of the gateway NAT, said gateway NAT that can be configured (NATO) assigning a public address to the application server (SERV_A), called a reflexive address pair (AR-P) with this address being associated with the remote communicating entity (UE), in such a way as to establish a first transmission channel providing the establishing of a first application session (SA1), **characterised in that** a new candidate exchange query comprising a history of the preceding candidates received from the same communicating entity to the application server (SERV_A) results in a configuration of the gateway NAT that can be configured (NATO) in such a way as to modify the association between at least one transmitted candidate and the reflexive address pair (AR-P) of the gateway NAT that can be configured (NATO), with the system establishing a second transmission channel between the communicating entity and the application server (SERV_A) providing the maintaining of the first application session (SA1).

7. Communicating entity (UE) comprising at least one radio module or network that makes it possible to transmit data over at least one interface of said terminal (UE) connected to a network, said communicating entity (UE) comprising a memory in which a history of candidates comprising at least one IP address and a port, is recorded and associated with an application server (SERV_A), with said candidate being collected from a server implementing one of the ICE, STUN or TURN protocols (SERV_IST), said communicating entity (UE) comprising at least one calculator in order to insert into at least one frame of a SIP protocol a data field comprising the history of the candidates collected and memorised as soon as a transmission channel is generated between said terminal (UE) and an application server (SERV_A), said communicating entity (UE) comprising two modems making it possible to detect the presence of at least two access networks (NET1, NET2) and to generate two transmission channels in parallel in which an application session established between said user terminal (UE) and an application server (SERV_A) switches from one transmission channel to another by retaining the same session identifier.
